# EUROPÄISCHE PATENTSCHRIFT

(11) **EP 0 600 243 B1**
(45) Veröffentlichungstag und Bekanntmachung des Hinweises auf die Patenterteilung: **21.05.1997**
(21) Anmeldenummer: 93117681.2
(22) Anmeldetag: 02.11.1993
(51) Int. Cl.: B60R 25/04

(54) **Verfahren zur Verhinderung eines Kraftfahrzeugdiebstahls**
Method for preventing the theft of a motorised vehicle
Procédé pour la prévention du vol d'une voiture automobile

(30) Priorität: 03.12.1992 DE 4240596
(43) Veröffentlichungstag der Anmeldung: 08.06.1994
(73) Patentinhaber: Bayerische Motoren Werke Aktiengesellschaft, 80788 München (DE)
(72) Erfinder: Wagner, Armin, D-82216 Maisach (DE)

(56) Entgegenhaltungen:
- EP-A- 0 365 866
- DE-A- 3 045 345
- FR-A- 2 545 632
- FR-A- 2 613 993
- US-A- 4 653 605
- PATENT ABSTRACTS OF JAPAN vol. 16, no. 299 (M-1274)2. Juli 1992 & JP-A-40 081 344 (NAKATANI KENJI)

## Beschreibung

Die Erfindung betrifft ein Verfahren zur Verhinderung eines Kraftfahrzeugdiebstahls nach dem Oberbegriff des Patentanspruchs 1.

Beispielsweise aus der DE 30 45 345 A1 und der DE 37 16 811 A1 ist jeweils eine Sicherheitsvorrichtung gegen Kraftfahrzeugdiebstahl bekannt, bei der u. a. oder ausschließlich eine wesentliche Funktion des Motors, wie z. B. die Motorzündung, blockiert wird, um eine unbefugte Inbetriebnahme des Kraftfahrzeuges zu verhindern. Sowohl bei der DE 37 16 811 A1 als auch bei der DE 30 45 345 A1 ist vorgesehen, das Diebstahlssicherungsgerät ausschließlich durch die Eingabe eines Sicherheitscodes entschärfen zu können. Aus dem Gegenstand beider Druckschriften geht jedoch hervor, daß über die Eingabe eines Sicherheitscodes lediglich Schalter zur Freigabe der bei geschärftem Diebstahlsicherungsgerät blockierten Funktionen geschlossen werden. Somit kann bei Kenntnis der Lage der den zu blockierenden Funktionen zugeordneten Schalter ein geschlossener Zustand dieser Schalter durch Kurzschluß oder Anlegen einer Spannung auf einfache Weise simuliert werden.

Weiterhin sind Diebstahlsicherungsgeräte in Form von kombinierten Zentralverriegelungs- und Diebstahlwarnanlagen bekannt. Derartige Diebstahlsicherungsgeräte sind in Kraftfahrzeugen üblicherweise über eine Informationsleitung mit einem Antriebssteuergerät, z. B. dem Motorsteuergerät, das sämtliche Funktionen einer Brennkraftmaschine steuert, verbunden. Bei geschärftem Diebstahlsicherungerät liegt auf der Informationsleitung ein definierter Spannungspegel an, woraufhin das Motorsteuergerät die Inbetriebnahme des Motors verhindert. Wird durch Einbruch die Wirkung des Diebstahlsicherungsgerätes gewaltsam umgangen, indem z. B. das Steuergerät ausgesteckt und/oder ein dem entschärften Diebstahlsicherungsgerät entsprechender Spannungspegel auf der Informationsleitung zum Motorsteuergerät angelegt wird, wird die Verhinderung der Inbetriebnahme des Motors ausgeschaltet.

Weiterhin ist aus der FR-A-2613993 eine Vorrichtung und ein Verfahren bekannt, bei dem bei geschärftem Diebstahlsicherungsgerät in einem Kraftfahrzeug zur Verhinderung eines Kraftfahrzeugdiebstahls ein Antriebssteuergerät ausgeschaltet wird. Das Diebstahlsicherungsgerät übermittelt automatisch bei jedem Entschärfvorgang einen Sendecode an das Antriebssteuergerät. Das Antriebssteuergerät wird nur dann wieder eingeschaltet, wenn der übermittelte Sendecode mit einem im Antriebssteuergerät bereitgehaltenen Vergleichscode übereinstimmt.

Bei diesem bekannten System wird stets derselbe Code übermittelt. Durch sogenanntes 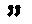 Mithören" kann der Code durch Nichtberechtigte herausgefunden und anschließend zum Zwecke des Kraftfahrzeugdiebstahls simuliert werden. Somit wird durch das bekannte System kein optimaler Diebstahlschutz erreicht.

Es ist daher Aufgabe der Erfindung, daß zum einen ein bei geschärftem Diebstahlsicherungerät ausgeschaltetes Antriebssteuergerät in Kraftfahrzeugen bei einem anderen als dem ordnungsgemäßen Entschärfvorgang des Diebstahlsicherungsgeräts, insbesondere beim Umgehen des Diebstahlsicherungsgeräts z. B. durch Ausstecken oder Zerstören, weiterhin ausgeschaltet bleibt und daß zum anderen eine Simulation des Sendecodes zwischen dem Diebstahlsicherungsgerät und dem Antriebssteuerungsgerät erschwert wird.

Ein ordnungsgemäßer Entschärfvorgang des Diebstahlsicherungsgerätes kann beispielsweise die aus den beiden Druckschritten DE 30 45 345 A1 und DE 37 16 811 A1 vorgesehene Eingabe eines Sicherheitscodes über ein Tastenfeld sein. Ein weiterer Entschärfvorgang kann jedoch auch das Schließen eines Schalters über ein Türschloß oder auch das drahtlose Aussenden eines Codesignals durch einen tragbaren Transponder sein, wobei das Diebstahlsicherungsgerät die Empfangseinrichtung dieses Codesignals darstellt.

Die Aufgabe der Erfindung wird durch die Merkmale des Patentanspruchs 1 gelöst.

Erfindungsgemäß wird bei geschärftem Diebstahlsicherungsgerät ein Antriebssteuergerät ausgeschaltet. Das Antriebssteuergerät wird nur dann wieder eingeschaltet, wenn das Diebstahlsicherungsgerät, insbesondere als Reaktion auf einen ordnungsgemäßen Entschärfvorgang, einen bestimmten Sendecode an das Antriebssteuergerät des Kraftfahrzeugs übermittelt. Das Antriebssteuergerät vergleicht den übermittelten Sendecode mit einem bereitgehaltenen Vergleichscode und läßt nur dann die Inbetriebnahme des Motors bzw. des Kraftfahrzeuges zu, wenn der vom Diebstahlsicherungsgerät übermittelte Sendecode mit dem bereitgehaltenen Vergleichscode übereinstimmt.

Darüber hinaus wird der bei jedem Schärfvorgang übermittelte Sendecode beispielsweise durch einen Zufallsgenerator oder durch ein Verschlüsselungsverfahren in vorgegebender Weise geändert. Dabei bleibt vorzugsweise der bei einem Schärfvorgang und der bei dem unmittelbar darauf folgenden Entschärfvorgang übermittelte Sendecode gleich. Bei jedem erneuten Schärfen des Diebstahlsichrungsgerätes wird der Sendecode geändert.

Die Erfindung erreicht durch die Änderung des Sendecodes einen wirkungsvollen Mithörschutz und erschwert eine Simulation des Sendecodes, da eine Vorhersagbarkeit ausgeschlossen ist. Darüber hinaus muß lediglich im Diebstahlsicherungsgerät ein Algorithmus zur Änderung des Sendecodes vorprogrammiert sein.

Der vom Diebstahlsicherungsgerät übermittelte Sendecode und der vom Antriebssteuergerät bereitgehaltene Vergleichscode können auf unterschiedliche Weise übereinstimmend gebildet werden. Beispielsweise können der Sendecode und der Vergleichscodes ständig gleichbleibend und jedem Fahrzeug fest zugeordnet im Diebstahlsicherungsgerät und im Antriebssteuergerät z.B. bei der Fahrzeugmontage vorprogrammiert werden. Sie können jedoch auch, beispielsweise bei jedem Schärf- und Entschärfvorgang des Diebstahlsicherungsgerätes, entsprechend eines in beiden Geräten vorprogrammierten, jedem Fahrzeug fest zugeordneten Algorithmus in gleicher Weise verändert werden.

Das Diebstahlsicherungsgerät kann beispielsweise eine übliche kombinierte Zentralverriegelungs-/ Diebstahlwarnanlage sein, die mit einem Motorsteuergerät als Antriebssteuergerät des Kraftfahrzeuges beispielsweise über eine serielle Datenleitung als Informationsleitung zur Übermittlung des Sendecodes verbunden ist. Der Sendecode kann auch drahtlos, per Lichtleiter oder über einen ohnehin vorhandenen, zwischen den Steuergeräten (z.B. Zentralverriegelungs-/ Diebstahlwarnanlage und Motorsteuergerät) kommunizierenden Datenbus übertragen werden.

Die Erfindung hat den Vorteil, daß bei Umgehen des Diebstahlsicherungsgerätes das Antriebssteuergerät bei vorher geschärftem Diebstahlsicherungsgerät ausgeschaltet bleibt, da die Übermittlung des Sendecodes ausbleibt oder der Sendecode nicht mit dem Vergleichscode übereinstimmt. Die Simulation eines Sendecodes allgemein und eines sich ständig ändernden Sendecodes im speziellen ist gegenüber der Simulation eines konstanten Pegels auf der Informationsleitung nahezu unmöglich. Durch eine derartige Verhinderung der Inbetriebnahme des Kraftfahrzeuges kann einem Kraftfahrzeugdiebstahl sicher entgegengewirkt werden.

Eine vorteilhafte Weiterbildung der Erfindung bietet der Gegenstand des Patentanspuchs 2.
Erfindungsgemäß übermittelt das Diebstahlsicherungsgerät zumindest einmal vor einem ersten Entschärfvorgang, z.B. während einer Initialisierungsroutine, einen vorprogrammierten Sendecode an das Antriebssteuergerät. Das Antriebssteuergerät speichert diesen Sendecode als Vergleichscode ab. Ist das Antriebssteuergerät durch einen Schärfvorgang des Diebstahlsicherungsgerätes ausgeschaltet, wird es nur dann wieder eingeschaltet, wenn der zuvor erstmalig übertragene Sendecode erneut übermittelt wird.

Mit dieser erfinderischen Ausgestaltung reicht die Vorprogrammierung des Diebstahlsicherungsgerätes allein mit einem zu übertragenden Sendecode aus. Ein Austausch defekter Steuergeräte in der Werkstatt ist problemlos möglich, da sich der Vergleichscode des Antriebssteuergeräts und der Sendecode des Diebstahlsicherungsgeräts sich selbsstständig aufeinander abstimmen.

Eine weitere vorteilhafte Ausgestaltung der Erfindung bietet der Gegenstand des Patentanspruchs 3.
Der Sendecode wird bei jedem Schärfvorgang und bei jedem Entschärfvorgang vom Diebstahlsicherungsgerät an das Antriebssteuergerät übermittelt. Der bei einem Schärfvorgang übermittelte Sendecode wird jeweils als Vergleichscode vom Antriebssteuergerät abgespeichert. Dieser Vergleichscode wird vom Antriebssteuergerät bei einem darauf folgenden Entschärfvorgang als Wieder-Einschaltbefehl erwartet.
Somit kann die Übertragung des Sendecodes bei einem Schärfvorgang gleichzeitig als Ausschaltbefehl und die Übertragung des Sendecodes bei einem Entschärfvorgang gleichzeitig als Einschaltbefehl des Antriebsteuergerätes eingesetzt werden.

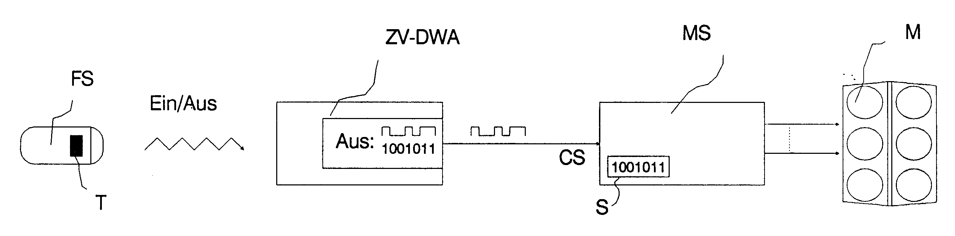

In der Zeichnung ist ein Ausführungsbeispiel der Erfindung dargestellt. Sie zeigt eine mögliche Vorrichtung zur Durchführung des erfindungsgemäßen Verfahrens.

Eine kombinierte Zentralverriegelungs- und Diebstahlwarnanlage ZV-DWA ist über eine Codesignalleitung CS mit dem Motorsteuergerät MS eines Kraftfahrzeuges verbunden. Das Motorsteuergerät MS enthält einen Speicher S, der zum Abspeichern eines von der Zentralverriegelungs- und Diebstahlwarnanlage ZV-DWA zumindest erstmals übermittelten Sendecodes vorgesehen ist. Vom Motorsteuergerät MS führen mehrere Steuerausgangsleitungen zur Brennkraftmaschine M. Zum Ein- und Ausschalten der Zentralverriegelungs- und Diebstahlwarnanlage ZV-DWA ist ein Funkschlüssel FS mit einem Taster T als Betätigungselement vorgesehen.

Wird bei entschärfter Zentralverriegelungs- und Diebstahlwarnanlage ZV-DWA das Kraftfahrzeug abgestellt und der Taster T des Funkschlüssels FS nach Verlassen des Kraftfahrzeuges betätigt, wird die Zentralverriegelungs- und Diebstahlwarnanlage ZV-DWA eingeschaltet bzw. geschärft (Ein). Durch diesen Einschaltvorgang wird auf der Informationsleitung CS ein Sendecode (z.B. 1001011) ausgegeben, der im Speicher S des Motorsteuergerätes MS als Vergleichscode (1001011) abgelegt wird und wodurch das Motorsteuergerät MS über die Steuerausgangsleitungen sämtliche Funktionen zur Inbetriebnahme der Brennkraftmaschine M unterbindet. Durch erneutes Betätigen des Tasters T wird die Zentralverriegelungs- und Diebstahlwarnanlage ZV-DWA ausgeschaltet bzw. entschärft (Aus), wodurch über die Informationsleitung CS erneut der Sendecode (1001011) an das Motorsteuergerät MS übermittelt wird. Das Motorsteuergerät MS vergleicht diesen übermittelten Sendecode mit dem im Speicher S abgelegten Vergleichscode. Stimmen die beiden Codewörter wie im dargestellten Fall überein, werden die für die Inbetriebnahme der Brennkraftmaschine M notwendigen Funktionen über die Steuerausgangssignale wieder freigegeben.

Der im Speicher S aufgrund einer ersten Übermittlung des Sendecodes von der Zentralverriegelungs- und Diebstahlwarnanlage ZV-DWA bereitgehaltene Vergleichscode kann in einer möglichen Ausgestaltung der Erfindung z.B. bei jedem weiteren Schärf- und Entschärfvorgang durch einen vorprogrammierten Algorithmus auf vorgegebene Weise geändert werden. Die Zentralverriegelungs- und Diebstahlwarnanlage ZV-DWA verändert in diesem Fall nach einer ersten Übermittlung des Sendecodes ebenfalls den bei jedem weiteren Schärf- und Entschärfvorgang zu übermittelnden Sendecode nach demselben Algorithmus. So stimmt auch in diesem Fall der jeweils neu übermittelte Sendecode mit dem im Speicher S bereitgehaltenen Vergleichscode immer überein.

Wird der ordnungsgemäße Entschärfvorgang über den Funkschlüssel FS umgangen, indem z.B. die Zentralverriegelungs- und Diebstahlwarnanlage ZV-DWA zerstört oder abgesteckt wird, bleibt der Sendecode (1001011) als Ausschaltbefehl der Zentralverriegelungs- und Diebstahlwarnanlage ZV-DWA bzw. als Einschaltbefehl des Motorsteuergeräts MS aus, wodurch die Inbetriebnahme des Motorsteuergerätes MS bzw. der Brennkraftmaschine M weiter verhindert wird. Durch dieses erfindungsgemäße Ausführungsbeispiel wird ein Kraftfahrzeugdiebstahl wirkungsvoll verhindert.

## Patentansprüche

1. Verfahren zur Verhinderung eines Kraftfahrzeugdiebstahls mit einem von außen aktivierbaren kraftfahrzeuginternen Codesendegerät und mit einem Antriebssteuergerät, bei dem bei von außen aktiviertem Codesendegerät das Antriebssteuergerät ausgeschaltet wird, bei dem das Codesendegerät automatisch bei jedem Deaktiviervorgang von außen einen Sendecode an das Antriebssteuergerät übermittelt und bei dem das Antriebssteuergerät nur dann wieder eingeschaltet wird, wenn der vom Codesendegerät übermittelte Sendecode mit einem im Antriebssteuergerät bereit gehaltenen Vergleichscode übereinstimmt, dadurch gekennzeichnet, daß das von außen aktivierbare und deaktivierbare Codesendegerät ein von außen schärfbares und entscharfbares Diebstahlsicherungsgerät (ZV-DWA) ist, daß der Deaktiviervorgang bzw. der Aktiviervorgang jeweils dem Entschärfvorgang (Aus) bzw. dem Schärfvorgang (Ein) des Diebstahlsicherungsgeräts (ZV-DWA) entspricht,und daß der bei jedem Schärfvorgang (Ein) übermittelte Sendecode beim darauffolgenden Schärfvorgang gegenüber dem zuvor übermittelten Sendecode geändert wird.

2. Verfahren nach Patentanspruch 1, dadurch gekennzeichnet, daß der im Antriebssteuergerät (MS) bereit gehaltene Vergleichscode (1001011) vor einem Entschärfvorgang (Aus) vom Diebstahlsicherungsgerät (ZV-DWA) übermittelt wird.

3. Verfahren nach Patentanspruch 1 oder 2, dadurch gekennzeichnet, daß bei jedem Schärfvorgang (Ein) und dem darauf folgenden Entschärfvorgang (Aus) derselbe Sendecode (1001011) vom Diebstahlsicherungsgerät (ZV-DWA) übermittelt wird.

## Claims

1. A method of inhibiting motor vehicle theft, with a drive control device, and with a code transmission device located within the vehicle and activatable from outside, wherein the drive control device is switched off when the code transmission device is activated from outside, wherein the code transmission device automatically transmits a transmission code from outside to the drive control device upon each deactivation procedure and wherein the drive control device is only switched on again if the transmission code sent by the code transmitting device corresponds to a reference code stored in the drive control device, **characterised in that** the code transmitting device which can be activated and deactivated from outside is an antitheft device (ZV-DWA) and that the deactivation procedure and the activation procedure in each case correspond to the deactivation procedure (off) and the activation procedure (on) for the antitheft device (ZV-DWA) and that the transmission code sent for each activation procedure (on) is changed from the transmission code sent previously at the time of the following activation procedure.

2. A method according to claim 1, **characterised in that** the reference code (1001011) stored ready in the drive control device (MS) is transmitted by the antitheft device (ZV-DWA) before a deactivation procedure (off).

3. A method according to claim 1 or 2, **characterised in that** the same code (1001011) is transmitted by the antitheft device (ZV-DWA) upon each activation procedure (on) and the subsequent deactivation procedure (off).

## Revendications

1. Procédé pour empêcher le vol d'un véhicule, selon lequel
un émetteur de code est logé dans le véhicule et activable de l'extérieur,
un appareil de commande du moteur est déconnecté lorsque l'émetteur de code est activé de l'extérieur,
l'émetteur de code, chaque fois qu'il est désactivé, envoie à l'appareil de commande un message codé qui a pour effet de le connecter à nouveau, à condition que ce message codé corresponde à un code de comparaison déjà mémorisé dans l'appareil de commande,
caractérisé en ce que
l'émetteur de code, activable et désactivable de l'extérieur, est un dispositif antivol à verrouillage centralisé (ZV-DWA),
l'opération de désactivation ou d'activation correspond à l'opération de désactivation (Aus) ou d'activation (EIN) du dispositif antivol à verrouillage centralisé (ZV-DWA) ,
le code qui est émis à chaque activation (EIN) est changé lors de l'activation suivante vis-à-vis de code émis transmis.

2. Procédé selon la revendication,
caractérisé en ce que
le code de comparaison (1001011) déjà présent dans l'appareil de commande du moteur (MS) est transmis par le dispositif antivol à verrouillage centralisé avant une opération de désactivation (Aus).

3. Procédé selon la revendication 1 ou 2,
caractérisé en ce qu'
à chaque opération d'activation (EIN) et à l'opération de désactivation (Aus) qui la suit, le même code (1001011) est émis par le dispositif antivol à verrouillage centralisé (ZV-DWA).
